Europäisches Patentamt

European Patent Office

Office européen des brevets

(11) Publication number: **0 462 628 A2**

# EUROPEAN PATENT APPLICATION

(21) Application number: **91113232.2**

(22) Date of filing: **05.01.88**

(51) Int. Cl.5: **F16K 31/363**, F16K 31/64

This application was filed on 07.08.1991 as a divisional application to the application mentioned under INID code 60.

(30) Priority: **07.01.87 GB 8700213**

(43) Date of publication of application:
**27.12.91 Bulletin 91/52**

(60) Publication number of the earlier application in accordance with Art.76 EPC: **0 274 408**

(84) Designated Contracting States:
**AT BE CH DE ES FR GB IT LI LU NL SE**

(71) Applicant: **KYSOR INDUSTRIAL CORPORATION**
**1 Madison Avenue**
**Cadillac Michigan 49601(US)**

(72) Inventor: **Elmer, Arthur Ernest Henry**
**Canters, Brook Cottage, Brewery Lane**
**Nailsworth, Gloucestershire, GL5 0JH(GB)**

(74) Representative: **Newell, William Joseph et al**
**Wynne-Jones, Lainé & James 22 Rodney Road**
**Cheltenham Gloucestershire GL50 1JJ(GB)**

(54) **Pressure modulating valve.**

(57) A pressure modulating valve (10) comprises a first movable valve element (18) operated by a thermal sensor (14) and a second movable valve element (20) having a fluid piston (22) and cooperating with the first valve element (18) to control the flow between an input pressure port (34) and an output port (26). The fluid piston (22) is exposed to the pressure (26) at the outlet of the valve (10). The second valve element (20) rides up and down axially in response to movements of the first valve element (20). The relationship between the position of the first valve element and the output pressure is dependent on the characteristics of the balancing spring (24).

This invention relates to a valve for regulating or modulating a pressure source. In particular, but not exclusively, the invention relates to a pressure modulating valve for modulating in accordance with a sensed temperature the pressure signal supplied to a viscous fluid clutch of the type shown in our published European Application No. EP-A-0274408 (the contents of which are incorporated herein by reference), but the valve may be used for other purposes.

Accordingly, in one aspect this invention provides a pressure modulating valve having an input pressure port and an output pressure port, a first movable valve element and a second movable valve element having a fluid piston means and cooperating with said first valve element to open and close a flow passage between the input pressure port and the output pressure port, the output port being exposed to one side of the fluid piston means, whereby movement of the first valve element in one sense causes said flow passage to open and the resultant changes in said output pressure exerted on the valve piston means cause the second valve element to move in a direction to close the flow passage and establish a required output pressure dependent on the position of said first movable valve element.

In another aspect, this invention provides a pressure modulating valve arranged to modulate a fluid pressure source in accordance with the sensed temperature.

A preferred embodiment of the invention provides a regulating valve which governs servo pressure in response to the sensed temperature to provide a thermally responsive pressure which always corresponds to the sensed temperature.

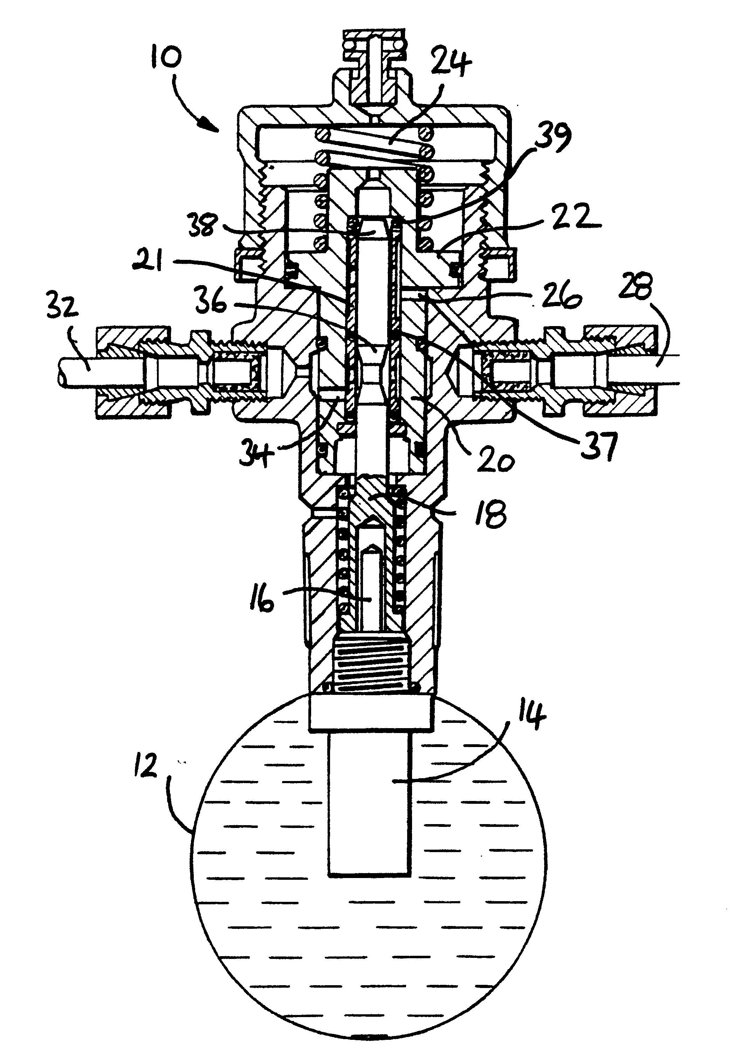

The invention may be performed in various ways and an embodiment thereof will now be described by way of example, reference being made to the accompanying drawing, which is a diagrammatic sectional elevation of an example of thermally responsive pressure regulating valve in accordance with the invention.

In the illustrated embodiment, a source of servo pressure is modulated or regulated by the pressure regulating valve 10 in accordance with the temperature of a liquid flowing through a duct 12. A wax capsule 14 is positioned in the duct 14 and its operating stem 16 is positioned in one end of a movable valve stem 18. The stem 18 moves within an axially floating spool 20 having an inner shell 21. The spool 20 is attached to a piston 22 the upper side of which is exposed to atmospheric pressure and to a balancing spring 24. The underside of the piston 22 is exposed to pneumatic servo-control pressure at 26, which is communicated via an output line 28. Compressed air to operate the system is admitted to the valve 10 via pressure line 32, passes through the spool at the port 34 and is controlled by a shoulder 36 on the inner stem 18 which cooperates with a seal 37 on the inner shell 21. This stem 18 also has a tapered end 38 which co-operates with a further seal 39 on the spool 22 so that, as the coolant temperature sensed by the wax capsule rises and the stem 18 lifts, the escape of air at the tapered end 38 is reduced and the flow of pressurised air from the line 32 is increased. The spool 20 correspondingly shifts upwards until the follow-up servo effect recreates the balance with increased force in the spring 24 and increased pressure in the working volume below the piston 22. Thus, the pressure in line 28 always corresponds to the temperature sensed by the capsule 14.

**Claims**

1. A pressure modulating valve having an input pressure port (34) and an output pressure port (26), a first movable valve element (18) and a second movable valve element (20) having a fluid piston means (22) and cooperating with said first valve element (18) to open and close a flow passage between the input pressure port (34) and the output pressure port (26), the output port (26) being exposed to one side of the fluid piston means (22), whereby movement of the first valve element (18) in one sense causes said flow passage to open and the resultant changes in said output pressure exerted on the valve piston means (22) causes the second valve element (20) to move in a direction to close the flow passage and establish a required output pressure dependent on the position of said first movable valve element (18).

2. A pressure modulating valve according to Claim 1, including bias means (24) urging said second valve element (20) towards a position in which said flow passage is closed, whereby the magnitude of the output pressure is dependent on the magnitude of the force applied by said bias means.

3. A pressure modulating valve according to Claim 2, wherein the bias means comprises a spring (24).

4. A pressure modulating valve according to any preceding claim, wherein said first valve element (18) is slidably received within said second element (21,22) and seal means (37) and (39) associated with said second element (21,22) for controlling flow between said input pressure port (34) and said output pressure port (26), and between said output pressure port (26) and a pressure vent, respectively.

5. A pressure modulating valve according to any preceding Claim, including transducer means (14) for moving said first valve element (18) in accordance with a sensed parameter.

6. A pressure modulating valve according to Claim 5, wherein said transducer means comprises a thermal sensor (14).

7. A pressure modulating valve arranged to modulate a fluid pressure source substantially continuously in accordance with a sensed temperature.